# EUROPEAN PATENT APPLICATION

(11) **EP 2 031 894 A1**
(43) Date of publication of application: **04.03.2009**
(21) Application number: 08162968.5
(22) Date of filing: 26.08.2008
(51) Int. Cl.: H04Q 11/00

(54) **Method, apparatus and system for transmitting test data**

(30) Priority: 28.08.2007 CN 200710148418
(71) Applicant: Huawei Technologies Co., Ltd., Longgang District, Shenzhen Guangdong 518129 (CN)
(72) Inventor: Yin, Jinrong Huawei Administration Building, Shenzhen Guangdong 518129 (CN)
(74) Representative: Thun, Clemens

(57) **Abstract**

A method for transmitting test data includes: an optical network unit (ONU) determining whether its current situation satisfies a preset condition, and if so, the ONU transmitting its test data to an optical line terminal (OLT). A method for acquiring a test data, an ONU, an OLT, and a passive optical network (PON) system are also provided. According to the method for transmitting test data, the method for acquiring test data, the ONU, the OLT, and the PON system provided by the present invention, the ONU may transmit its test data in real time, and the OLT may also obtain the ONU test data in real time, which helps to the real-time monitoring on the network status of the PON.

## Description

### CROSS-REFERENCE TO RELATED APPLICATIONS

This application claims priority to Chinese Patent Application No.200710148418.7, filed on August. 28, 2007, entitled "method, apparatus, and system for transmitting test data", commonly assigned, and incorporated by reference herein for all purposes.

### FIELD OF THE INVENTION

The present invention relates to a passive optical network (PON) technique, in particularly, to a method for transmitting test data, an optical line terminal (OLT), an optical network unit (ONU), and a PON system.

### BACKGROUD

The PON technique is a point-to-multipoint optical access technique. A PON system includes an OLT, one or more ONUs, and an optical distribution network (ODN) also known as a PON access point for accessing the ONU into the OLT.

Currently, the automatic test of the PON system remains stuck in a stage that the OLT controls the ONU to transmit test data. The passive transmission of the ONU cannot satisfy its needs, which is disadvantageous for the real-time monitoring, maintenance, and management of the network status of the PON.

### SUMMARY

Accordingly, in an embodiment, the present invention provides a method for transmitting test data, which includes the following steps.

A. An optical network unit (ONU) determines whether there is a need to send test data according to its current situation, and if there is, B is performed.

B. The ONU sends the test data to an optical line terminal (OLT).

In an embodiment, the present invention further provides an ONU apparatus, which includes a test data providing module, a transmission control module, and a transmitter module.

The test data providing module is adapted to provide test data of the ONU.

The transmission control module is adapted to determine whether there is a need to send the test data according to the current situation of the optical network, and indicate the transmitter module.

The transmitter module is adapted to send the test data to the OLT apparatus according to the indication of the transmission control module.

Moreover, in an embodiment, the present invention further provides an OLT apparatus, which includes a data receiving module and a test data extraction module.

The data receiving module is adapted to receive a data frame sent by an ONU apparatus.

The test data extraction module is adapted to parse the data frame, and extract test data provided by the ONU apparatus from a predetermined position of the data frame.

In an embodiment, the present invention further provides a PON system, which includes an OLT apparatus connected to one or more ONU apparatuses through an ODN.

The at least one ONU apparatus is adapted to determine whether there is a need to send test data according to the current situation of the optical network, and if there is, carry the test data at a predetermined position of a data frame and send the data frame to the OLT apparatus.

The OLT apparatus is adapted to receive the data frame sent by the ONU apparatus, parse the data frame, and extract the test data provided by the ONU apparatus from the predetermined position of the data frame.

In the embodiments of the present invention, the ONU is used to actively transmit a local test data to the OLT, and the OLT acquires the ONU test data actively transmitted by the ONU in real time, so as to achieve the real-time monitoring of the network status of the PON system.

### BRIEF DESCRIPTION OF THE DRAWINGS

FIG. 1 is a schematic view illustrating a structure of a PON system;

FIG. 2 is a flow chart of a method for transmitting test data according to an embodiment of the present invention;

FIG. 3 is a flow chart of a method for acquiring test data according to an embodiment of the present invention;

FIG. 4 is a schematic flow chart illustrating processes of transmitting and acquiring the test data respectively performed by the ONU and the OLT through the method of an embodiment of the present invention;

FIG. 5 is a flow chart of a method for transmitting test data according to a first embodiment of the present invention;

FIG. 6 is a flow chart of a method for acquiring test data according to the first embodiment of the present invention;

FIG. 7 is a schematic flow chart illustrating processes of transmitting and acquiring the test data respectively performed by the ONU and the OLT through the method of the first embodiment of the present invention;

FIG. 8 is a flow chart of a method for transmitting test data according to a second embodiment of the present invention;

FIG. 9 is a flow chart of a method for acquiring test data according to the second embodiment of the present invention;

FIG. 10 is a schematic flow chart illustrating processes of transmitting and acquiring the test data respectively performed by the ONU and the OLT through the method of the second embodiment of the present invention;

FIG. 11 is a flow chart of a method for transmitting test data according to a third embodiment of the present invention;

FIG. 12 is a flow chart of a method for acquiring test data according to the third embodiment of the present invention;

FIG. 13 is a schematic flow chart illustrating processes of transmitting and acquiring the test data respectively performed by the ONU and the OLT through the method of the third embodiment of the present invention;

FIG. 14 is a structural view of an ONU according to an embodiment of the present invention;

FIG. 15 is a structural view of an OLT according to an embodiment of the present invention;

FIG. 16 is a structural view of an ONU according to a fourth embodiment of the present invention;

FIG. 17 is a structural view of an OLT according to the fourth embodiment of the present invention;

FIG. 18 is a structural view of an ONU according to a fifth embodiment of the present invention;

FIG. 19 is a structural view of an OLT according to the fifth embodiment of the present invention;

FIG. 20 is a structural view of an ONU according to a sixth embodiment of the present invention; and

FIG. 21 is a structural view of an OLT according to the sixth embodiment of the present invention.

### DETAILED DESCRIPTION

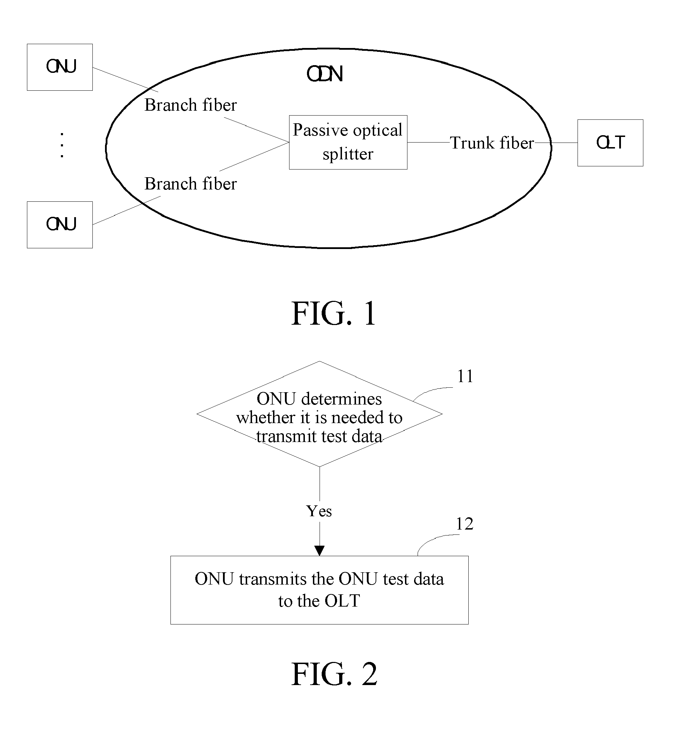

Referring to FIG. 1, a PON system includes at least one OLT, one or more ONUs, and an ODN also known as a PON access point for accessing the ONU into the OLT. The ODN includes a passive optical splitter adapted for optical power distribution, a trunk fiber connected between the passive optical splitter and the OLT, and one or more branch fibers connected between the passive optical splitter and the one or more ONUs. Usually, if the ONU is provided with a subscriber port function, for example, an Ethernet subscriber port function, the ONU may be referred to as an ONT, and the ONU in the present invention generally refers to an ONU or ONT. The real-time monitoring, maintenance, and management on the network status of the PON system are achieved in the following embodiments of the present invention.

A method for transmitting test data and a method for acquiring test data are provided in an embodiment of the present invention.

The method for transmitting test data includes the following steps. A. An ONU determines whether there is a need to transmit test data according to its current situation, and if there is, B is performed. B. The ONU transmits the test data to an OLT.

The test data is carried in a physical layer operations administration maintenance (PLOAM) message. Or, the test data is carried in an ONU management and control interface (OMCI) channel.

The ONU transmits the test data and a predetermined identifier that indicates the test data to the OLT.

Optionally, the method may further include the ONU acquiring an allocated bandwidth from the OLT for transmitting the test data.

Optionally, the method may further include the ONU sending a bandwidth request to the OLT to get a bandwidth for transmitting the test data over an embedded OAM channel; or the OLT authorizing the bandwidth for transmitting the test data to the ONU according to an existing monitoring result of ONU status.

In addition, the method includes the ONU determining whether there is a need to transmit the test data according to the current situation of the optical network.

Referring to FIG. 2, a method for transmitting test data is provided in an embodiment of the present invention, which includes the following steps.

Step 11, the ONU determines whether there is a need to transmit test data according to the current situation of the optical network, and if there is step 12 is performed;

Step 12, the ONU transmits its test data to the OLT.

In step 11, the ONU determines whether there is a need to transmit or not according to its performance parameters. Further, a decision condition is set for each performance parameter, and the determination is made based on the decision result of one or more of the following parameters. For example, the determination may include one or more of the following steps. The steps include determining whether the ONU bias current is out of a preset range of the ONU bias current; determining whether the ONU transceiver temperature is out of a preset range of the ONU transceiver temperature; determining whether the ONU working voltage is out of a preset range of the ONU working voltage; determining whether the ONU transmitted optical power is out of a preset range of transmitted optical power; determining whether the ONU received optical power is out of a preset range of the ONU received optical power; and determining whether the upstream or downstream BER(bit error ratio) is out of a preset range of the BER. In addition, it may also be determined whether other preset events occur in the ONU.

In step 12, the ONU test data may include one or more of the parameters including ONU bias current, ONU transceiver temperature, ONU working voltage, ONU transmitted optical power, ONU received optical power, and one or more parameters obtained by processing any of the above parameters.

The ONU may send the test data to be transmitted to the OLT through an OMCI channel (the process will be illustrated in detail in the following embodiments). Or, the ONU may send the test data to the OLT in a PLOAM message (the process will be illustrated in detail in the following embodiments).

When the ONU sends the test data to be transmitted over the OMCI channel, the OMCI message will include a predetermined identifier indicating an active transmission event or test data. For example, the OLT and the ONU may agree on a value of a transaction correlation identifier in the OMCI message, such as 0x0000. Accordingly, on receiving an upstream data transmitted by the ONU, the OLT extracts the test data transmitted by the ONU according to the predetermined identifier.

Optionally, if the ONU finds that the bandwidth of the OMCI channel is insufficient to carry the test data to be transmitted, the ONU may request the OLT for an OMCI bandwidth for transmitting the test data to be transmitted.

Optionally, the OLT may actively allocate an OMCI bandwidth to the ONU according to a local existing status monitoring result of the optical network, for transmitting the test data to be transmitted by the ONU.

When the ONU sends the test data to be transmitted through a PLOAM message, the PLOAM message will include a predetermined identifier indicating an active transmission event or test data. The OLT and the ONU may agree on a value of a specific field identifier in the PLOAM message, for example, agree on the value of the second byte in the PLOAM message to be 00001010. Accordingly, on receiving an upstream data transmitted by the ONU, the OLT extracts the test data transmitted by the ONU according to the predetermined identifier.

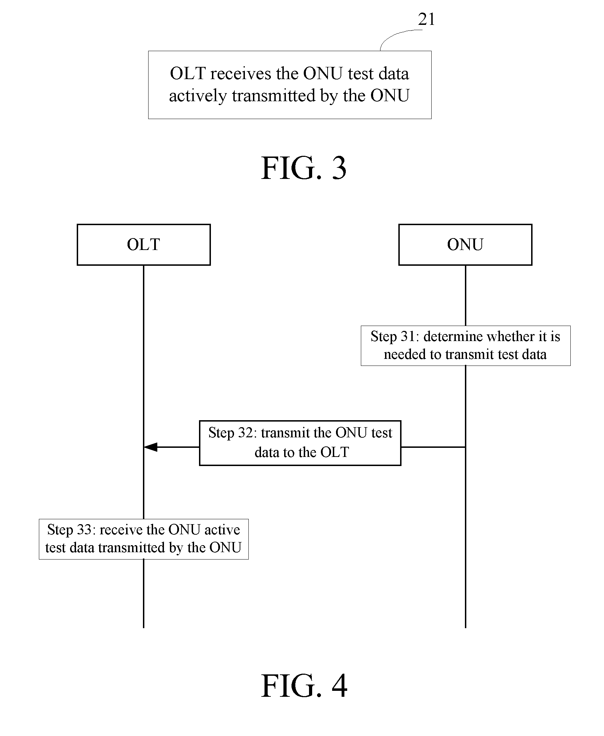

Referring to FIG. 3, a method for acquiring test data is provided in an embodiment of the present invention, which includes the following steps.

Step 21, the OLT receives the ONU test data actively transmitted by the ONU.

On receiving the message carrying the ONU test data and the predetermined identifier indicating an active transmit event or test data, the OLT identifies the message carrying the test data according to the predetermined identifier, and then parses the test data from the message.

Because the processes of transmitting and acquiring the test data respectively performed by the ONU and the OLT through the method of the above embodiment of the present invention are close related to each other, the two processes will be illustrated in detail below in terms of information interaction.

Referring to FIG. 4, the processes of transmitting and acquiring the test data respectively performed by the ONU and the OLT through the method of the above embodiment of the present invention includes the following steps.

Step 31, the ONU determines whether there is a need to transmit test data according to the current situation of the optical network (the same as Step 11), and if there is, step 32 is performed. In step 31 of FIG. 4, the ONU determining there is a need to transmit the test data is described by way of example.

Step 32, the ONU transmits its test data to the OLT.

Step 33, the OLT receives the ONU test data transmitted by the ONU.

It can be seen from the embodiment of the present invention that once determining to transmit the test data according to the current situation of the optical network, the ONU actively sends its test data to the OLT. In this manner, when needing to transmit test data (for example, the performance of the network is unstable), the ONU can report the test data to the OLT in real time, which helps to perform the real-time monitoring, maintenance, and management on the status of the PON system. Accordingly, the OLT may obtain the ONU test data actively transmitted by the ONU in real time, which helps to perform real-time monitoring, maintenance, and management on the network status of the PON.

In a first embodiment of the present invention, the ONU carries the test data to be transmitted in a PLOAM message and then sends the message to the OLT. When the ONU carries the test data to be transmitted in a PLOAM message, the PLOAM message will also include a predetermined identifier indicating an active transmit event or test data. The OLT and the ONU may agree on a value of a specific field identifier in the PLOAM message, for example, agree on the value of the second byte in the PLOAM message to be 00001010. Accordingly, on receiving an upstream data transmitted by the ONU, the OLT receives the test data transmitted by the ONU according to the predetermined identifier.

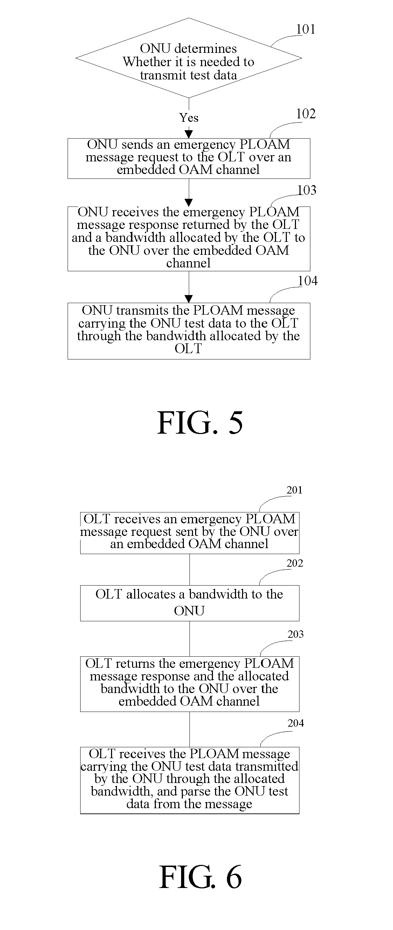

Referring to FIG. 5, a method for transmitting test data according to the first embodiment of the present invention includes the following steps.

Step 101, the ONU determines whether there is a need to transmit test data according to the current situation of the optical network, and if there is, step 102 is performed.

Step 102, the ONU sends an emergency PLOAM message request to the OLT over an embedded OAM channel.

Step 103, the ONU receives the emergency PLOAM message response returned by the OLT and a bandwidth allocated by the OLT to the ONU over the embedded OAM channel.

Step 104, the ONU transmits the PLOAM message carrying the ONU test data to the OLT through the bandwidth allocated by the OLT.

In step 101, the ONU determines whether there is a need to transmit test data according to its performance parameters. Further, a decision condition is set for each performance parameter, and the determination is made based on the decision result of one or more parameters. This determination step is identical to Step 11, and the details will not be repeated herein again.

In step 104, the ONU test data is identical to the test data in Step 12, so the details will not be repeated herein again.

In step 104, the PLOAM message for carrying the ONU test data may be in a format listed in Table 1 or Table 2. Table 1 and Table 2 respectively show a typical format of a PLOAM message for carrying test data.

**Table 1**

| Byte No. | Content | Description |
|---|---|---|
| 1 | ONU-ID | ONU-ID, indicating an ONU initiating the message |
| 2 | 00001010 | Representing the message type is the "test data" |
| 3 | aaaaaaaa | Temperature (°C), binary complement code type data, at a resolution of 1°C |
| 4 | bbbbbbbb | Transceiver voltage (V), binary complement code type data, at a resolution of 0.1 V |
| 5 | cccccccc | Laser bias current (mA), unsigned integer, at a resolution of 1 mA |
| 6 | dddddddd | Transmitted optical power, at a unit of 2 dBm, |
| | | binary complement code type data, at a resolution of 0.1 dB |
| 7 | eeeeeeee | Received optical power, at a unit of 2 dBm, |
| 8 | eeeeeeee | binary complement code type data, at a unit of 0.1 dB |
| 9-12 | Reserved for future use | Reserved |

**Table 2**

| Byte No. | Content | Description |
|---|---|---|
| 1 | ONU-ID | ONU-ID, indicating an ONU initiating the message |
| 2 | 00001010 | Representing the message type is the "test data" |
| 3 | Type1 | Type 1 |
| 4 | Value1 | Value 1 |
| 5 | Type2 | Type 2 |
| 6 | Value2 | Value 2 |
| 7 | Type3 | Type 3 |
| 8 | Value3 | Value 3 |
| 9 | Type4 | Type 4 |
| 10 | Value4 | Value 4 |
| 11 | Type5 | Type 5 |
| 12 | Value5 | Value 5 |

For example, the "type" in Table 2 may be defined as that in Table 3.

**Table 3**

| Type No. | Parameter | Description |
|---|---|---|
| 1 | Transceiver temperature (°C) | Binary complement code type data, at a resolution of 1 °C |
| 2 | Transceiver voltage (V) | Binary complement code type data, at a resolution of 0.1 V |
| 3 | Laser bias current (mA) | Unsigned integer, at a resolution of 1 mA |
| 4 | Transmitted optical power (dBm) | Binary complement code type data, at a resolution of 0.1 dB |
| 5 | Received optical power (dBm) | Binary complement code type data, at a resolution of 0.1 dB, and with an offset of -17 dB |
| 6-255 | Reserved | |

Referring to FIG. 6, a method for acquiring test data according to the first embodiment of the present invention includes the following steps.

Step 201, the OLT receives an emergency PLOAM message request sent by the ONU over an embedded OAM channel.

Step 202, the OLT allocates a bandwidth to the ONU.

Step 203, the OLT returns the emergency PLOAM message response and the allocated bandwidth to the ONU over the embedded OAM channel.

Step 204, the OLT receives the PLOAM message carrying the ONU test data transmitted by the ONU through the allocated bandwidth, and parses the ONU test data from the message.

Further, in Step 204, on receiving the PLOAM message carrying the ONU test data and a predetermined identifier indicating an active transmit event or test data, the OLT identifies the message carrying the test data according to the predetermined identifier, and then parses the test data from the message.

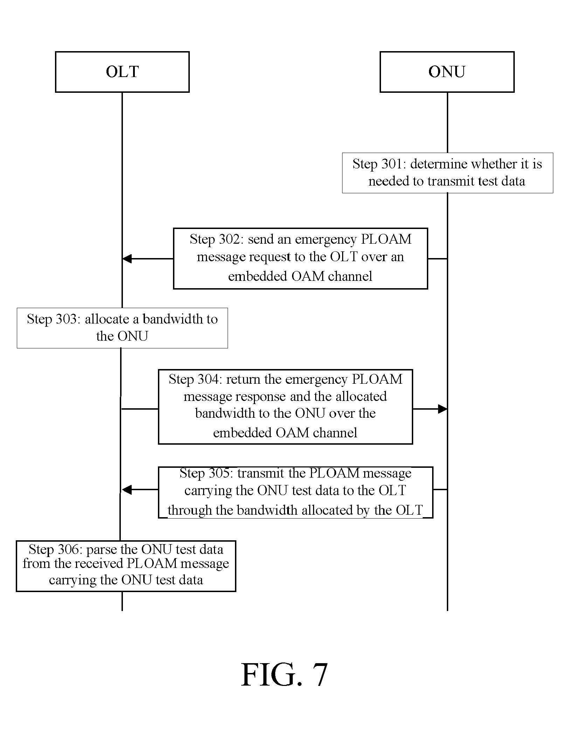

Referring to FIG. 7, the processes of transmitting and acquiring the test data respectively performed by the ONU and the OLT through the method of the first embodiment of the present invention include the following steps.

Step 301, the ONU determines whether there is a need to transmit test data according to its current situation, and if there is, step 302 is performed. In step 301 of FIG. 7, the ONU determining there is a need to transmit test data according to the current situation of the optical network is described by way of example.

Step 302, the ONU sends an emergency PLOAM message request to the OLT over an embedded OAM channel.

Step 303, the OLT allocates a bandwidth to the ONU.

Step 304, the OLT returns the emergency PLOAM message response and the allocated bandwidth to the ONU over the embedded OAM channel.

Step 305, the ONU transmits the PLOAM message carrying the ONU test data to the OLT through the bandwidth allocated by the OLT.

Step 306, the OLT parses the ONU test data from the received PLOAM message carrying the ONU test data.

Therefore, according to the method of the first embodiment of the present invention, once determining to transmit test data according to its current situation, the ONU sends an emergency PLOAM message request to the OLT over an embedded OAM channel, and after obtaining an emergency PLOAM message response returned by the OLT and an allocated bandwidth, the ONU transmits the PLOAM message carrying the ONU test data to the OLT through the bandwidth allocated by the OLT. In this manner, when needing to transmit test data (for example, the performance is unstable), the ONU may transmit the test data to the OLT in time and the OLT can obtain the test data from the ONU, which helps to perform the real-time monitoring, maintenance, and management on the network status of the PON. Accordingly, the OLT responds in time in response to the emergency PLOAM message request sent by the ONU to allocate a bandwidth to the ONU, such that the ONU can transmit the PLOAM message carrying the ONU test data to the OLT in real time, which helps to perform the real-time monitoring, maintenance, and management on the network status of the PON.

In a second embodiment of the present invention, the ONU sends the test data to be transmitted to the OLT through the OMCI channel. When the ONU sends the test data to be transmitted through the OMCI channel, the OMCI message will include a predetermined identifier indicating an active transmit event or test data. For example, the OLT and the ONU may agree on a value of a transaction correlation identifier in the OMCI message, such as 0x0000. Accordingly, on receiving an upstream data transmitted by the ONU, the OLT extracts the test data transmitted by the ONU according to the predetermined identifier.

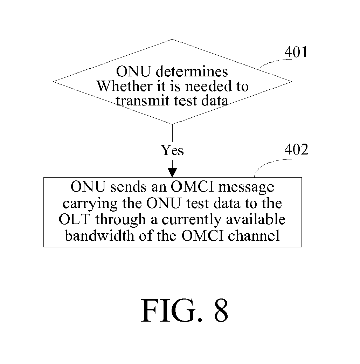

Referring to FIG. 8, a method for transmitting test data according to the second embodiment of the present invention includes the following steps.

Step 401, the ONU determines whether there is a need to transmit test data according to the current situation of the optical network, and if there is, step 402 is performed.

Step 402, the ONU sends an OMCI message carrying the ONU test data to the OLT through a currently available bandwidth of the OMCI channel.

Step 401 is completely identical to Step 11, so the details will not be repeated herein again.

In Step 402, the ONU test data is identical to the test data in Step 12, and the details will not be repeated herein again.

In Step 402, the currently available bandwidth of the OMCI channel of the ONU is a bandwidth normally allocated by the OLT to the OMCI channel of the ONU. [0097] In Step 402, the OMCI message for carrying the ONU test data has a transaction correlation identifier with a value agreed by the OLT and the ONU, for example, 0x0000. The OMCI message carrying the test data may be in a format listed in Table 4.

**Table 4**

| Domain | Byte | 8 | 7 | 6 | 5 | 4 | 3 | 2 | 1 | Description |
|---|---|---|---|---|---|---|---|---|---|---|
| Transaction | 6 | 0 | 0 | 0 | 0 | 0 | 0 | 0 | 0 | Adapted to the |
| related identifier | 7 | 0 | 0 | 0 | 0 | 0 | 0 | 0 | 0 | ONU actively reporting the test data, and the transaction correlation identifier being 0x0000 |
| Message type | 8 | 0 | 0 | 0 | | | | | | DB=0,AR=0,AK=0 bit5-1: action=test result |
| Apparatus identifier type | 9 | 0 | 0 | 0 | 0 | 1 | 0 | 1 | 0 | OMCI=0x0A |
| Message identifier | 10-11 | | | | | | | | | Entity class Note: this format is applicable to ONT-G, ONU-G, and circuit package entity classes |
| | 12 | | | | | | | | | MSB in an object example |
| | 13 | | | | | | | | | LSB in an object example |
| Message content | 14 | | | | | | | | | Type 1 |
| | 15-16 | | | | | | | | | Value 1 |
| | 17 | | | | | | | | | Type 2 |
| | 18-19 | | | | | | | | | Value 2 |
| | 20 | | | | | | | | | Type 3 |
| | 21-22 | | | | | | | | | Value 3 |
| | 23 | | | | | | | | | Type 4 |
| | 24-25 | | | | | | | | | Value 4 |
| | 26 | | | | | | | | | Type 5 |
| | 27-28 | | | | | | | | | Value 5 |
| | 29 | | | | | | | | | Type 6 |
| | 30-31 | | | | | | | | | Value 6 |
| | 32 | | | | | | | | | Type 7 |
| | 33-34 | | | | | | | | | Value 7 |
| | 35 | | | | | | | | | Type 8 |
| | 36-37 | | | | | | | | | Value 8 |
| | 38 | | | | | | | | | Type 9 |
| | 39-40 | | | | | | | | | Value 9 |
| | 41 | | | | | | | | | Type 10 |
| | 42-43 | | | | | | | | | Value 10 |
| | 44-45 | 0 | 0 | 0 | 0 | 0 | 0 | 0 | 0 | Fill-in 1 |

In addition, the "type" in Table 4 may be defined as that in Table 5.

**Table 5**

| Type | Parameter | Description |
|---|---|---|
| 1 | Supply voltage (V) | DC voltage, binary complement code type data, at a resolution of 20 mV |
| 2 | Low voltage (V) | DC voltage, binary complement code type data, at a resolution of 100 µV |
| 3 | Received optical power (dB) | dBµW, binary complement code type data, at a resolution of 0.002 dB |
| 4 | Received optical power (W) | Unsigned integer, at a resolution of 0.1 µW |
| 5 | Transmitted optical power (dB) | dBµW, binary complement code type data, at a resolution of 0.002 dB |
| 6 | Transmitted optical power (W) | Unsigned integer, at a resolution of 0.1 µW |
| 7 | Video signal voltage (dB) | dBmV, binary complement code type data, at a resolution of 0.002 dB |
| 8 | Video signal voltage (V) | RF signal voltage, unsigned integer, at a resolution of 200 µV |
| 9 | Laser bias current | Unsigned integer, at a resolution of 2 µA |
| 10 | Received signal Q factor | Unsigned integer, at a resolution of 0.1 |
| 11 | Signal-noise ratio (dB) | Unsigned integer, at a resolution of 0.1 dB |
| 12 | Transceiver temperature (°C) | Binary complement code type integer, at a resolution of 1/256 °C |
| 13..239 | Reserved for later standardization | |
| 240-254 | For vendor customization instead of standardization | |
| 255 | Reserved | |

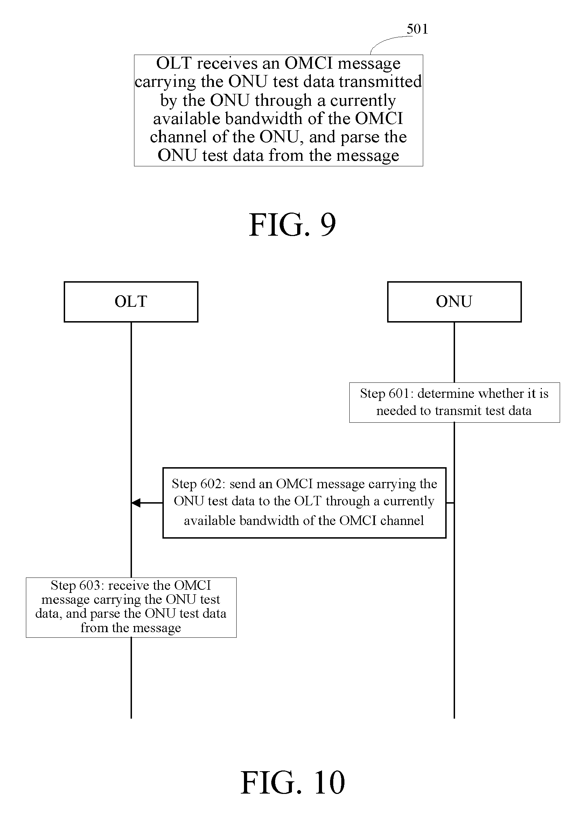

Referring to FIG. 9, a method for acquiring test data according to the present invention second embodiment includes the following steps.

Step 501, the OLT receives an OMCI message carrying the ONU test data transmitted by the ONU through a currently available bandwidth of the OMCI channel of the ONU, and parses the ONU test data from the message.

Further, the OMCI message carrying the ONU test data transmitted by the ONU includes a predetermined identifier that indicates the test data. On receiving the message transmitted by the ONU, the OLT identifies the message carrying the test data according to the predetermined identifier, and then parses the test data from the message.

In Step 501, the currently available bandwidth of the OMCI channel of the ONU is a bandwidth normally allocated by the OLT to the OMCI channel of the ONU.

Referring to FIG. 10, a schematic flow chart illustrating processes of transmitting and acquiring the test data respectively performed by the ONU and the OLT through the method of the second embodiment of the present invention is shown, which include the following steps.

Step 601, the ONU determines whether there is a need to transmit test data according to its current situation, and if there is, Step 602 is performed. In step 601 of FIG. 10, the ONU determining there is a need to transmit test data is described by way of example.

Step 602, the ONU sends an OMCI message carrying the ONU test data to the OLT through a currently available bandwidth of the OMCI channel.

Step 603, the OLT receives the OMCI message carrying the ONU test data transmitted by the ONU over the OMCI channel, and parses the ONU test data from the message.

In Step 602, the currently available bandwidth of the OMCI channel of the ONU is a bandwidth normally allocated by the OLT to the OMCI channel of the ONU.

Therefore, according to the method of the second embodiment of the present invention, once determining to transmit test data according to its current situation, the ONU sends an OMCI message to the OLT through a bandwidth normally allocated to the OMCI channel by the OLT. In this manner, when needing to transmit test data (for example, the performance is unstable), the ONU can Report the test data to the OLT in time, which helps to perform the real-time monitoring, maintenance, and management on the network status of the PON. Accordingly, the OLT can obtain the ONU test data actively transmitted by the ONU in real time through the bandwidth normally allocated to the OMCI channel, which helps to perform the real-time monitoring, maintenance, and management on the network status of the PON.

In the third embodiment of the present invention, the ONU sends the test data to be transmitted to the OLT through an OMCI channel. Different from the second embodiment, if the ONU finds that the bandwidth allocated to the OMCI channel is insufficient to carry the ONU test data, the ONU may request the OLT for an OMCI bandwidth for transmitting the test data to be transmitted. The OLT may also actively allocate an OMCI bandwidth to the ONU according to a local existing status monitoring result of the optical network, so as to transmit the test data to be transmitted by the ONU.

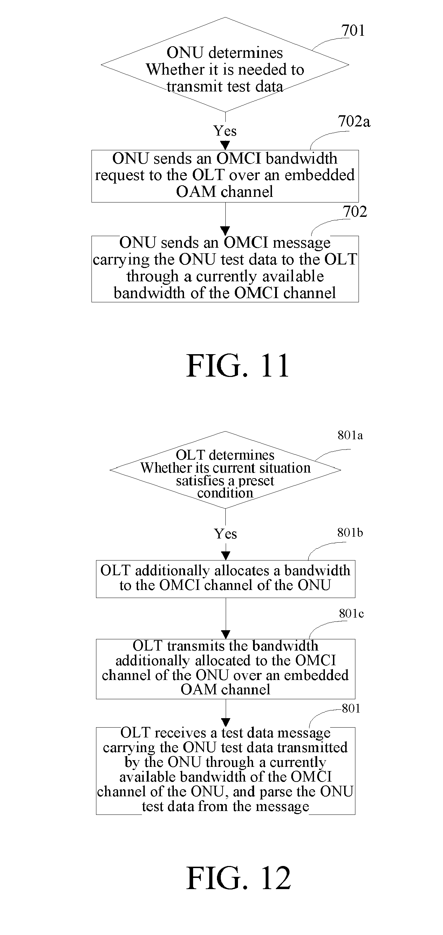

Referring to FIG. 11, a method for transmitting test data according to the third embodiment of the present invention includes the following steps.

Step 701, the ONU determines whether there is a need to transmit test data according to its current situation, and if there is, step 702 is performed.

Step 702, the ONU sends an OMCI message carrying the ONU test data to the OLT through a currently available bandwidth of the OMCI channel.

In addition, Steps 701 and 702 adopt the same principles of Steps 401 and 402 in the second embodiment, so the details will not be repeated herein again.

Different from the second embodiment, in Step 702, the currently available bandwidth of the OMCI channel of the ONU is a bandwidth normally allocated by the OLT to the OMCI channel of the ONU added with a bandwidth additionally allocated by the OLT to the OMCI channel of the ONU. In detail, when the OMCI bandwidth normally allocated by the OLT to the ONU is insufficient, the OLT additionally allocates a bandwidth to the ONU to carry the test data, and the additional bandwidth of the OMCI channel may be actively allocated by the OLT to the ONU, or allocated by the OLT to the ONU in response to a request from the ONU.

If, in Step 702, the currently available bandwidth of the OMCI channel of the ONU is a bandwidth normally allocated by the OLT to the OMCI channel of the ONU added with a bandwidth additionally allocated by the OLT to the OMCI channel of the ONU in response to a request from the ONU, referring to FIG. 11, the method further includes Step 702a between Step 701 and Step 702.

Step 702a, the ONU sends an OMCI bandwidth request to the OLT over an embedded OAM channel.

A PLOu domain of the OMCI bandwidth request has an Ind field in a format listed in Table 6.

**Table 6**

| Bit position | Function |
|---|---|
| 7 (MSB) | Emergency PLOAM waiting for transmission (1 = there is a PLOAM waiting for transmission, 0 = there is no PLOAM waiting for transmission) |
| 6 | FEC status (1 = FEC is turned on, 0 = FEC is turned off) |
| 5 | RDI status (1 = error, 0 = correct) |
| 4 | Type 2T-CONT flow waiting for transmission |
| 3 | Type 3T-CONT flow waiting for transmission |
| 2 | Type 4T-CONT flow waiting for transmission |
| 1 | Type 5T-CONT flow waiting for transmission |
| 0 (LSB) | Test data waiting for transmission |

Referring to FIG. 12, a method for acquiring test data according to the third embodiment of the present invention includes the following steps.

Step 801, the OLT receives test data message carrying the ONU test data transmitted by the ONU through a currently available bandwidth of the OMCI channel of the ONU, and parses the ONU test data from the message.

Further, in Step 801, the OMCI message carrying the ONU test data transmitted by the ONU includes a predetermined identifier that indicates the test data. On receiving the message transmitted by the ONU, the OLT identifies the message carrying the test data according to the predetermined identifier, and then parses the test data from the message.

In Step 801, the currently available bandwidth of the OMCI channel of the ONU is a bandwidth normally allocated by the OLT to the OMCI channel of the ONU added with a bandwidth additionally allocated by the OLT to the OMCI channel of the ONU. In addition, the additional bandwidth of the OMCI channel may be actively allocated by the OLT to the ONU, or allocated by the OLT to the ONU in response to a request from the ONU.

If, in Step 801, the currently available bandwidth of the OMCI channel of the ONU is a bandwidth normally allocated by the OLT to the OMCI channel of the ONU added with a bandwidth additionally allocated by the OLT to the OMCI channel of the ONU, referring to FIG. 12, the method further includes the following steps before Step 801.

In Step 801a, the OLT determines whether the current situation of the optical network satisfies a preset condition, and if so, Step 801b is performed.

In Step 801b, the OLT additionally allocates a bandwidth to the OMCI channel of the ONU.

In Step 801c, the OLT transmits the bandwidth additionally allocated to the OMCI channel of the ONU over an embedded OAM channel.

In addition, the determination in Step 801a may include one or more of the following steps. The steps include determining whether the OLT received optical power is out of a preset range of the OLT received optical power; determining whether the BER is out of a preset range of the BER; determining whether other preset events occur in the OLT.

If, in Step 801, the currently available bandwidth of the OMCI channel of the ONU is a bandwidth normally allocated by the OLT to the OMCI channel of the ONU added with a bandwidth additionally allocated by the OLT to the OMCI channel of the ONU in response to a request from the ONU, the method may further include Steps 801d to 801f before Step 801. Steps 80 1 d to 801f are not shown in FIG. 12.

In Step 801d, the OLT receives an OMCI bandwidth request sent by the ONU over the embedded OAM channel.

In Step 801e, the OLT allocates an additional bandwidth to the OMCI channel of the ONU.

In Step 801f, the OLT transmits the bandwidth additionally allocated to the OMCI channel of the ONU over the embedded OAM channel.

Further, a PLOu domain of the OMCI bandwidth request in Step 801d has an Ind byte in a format listed in Table 6.

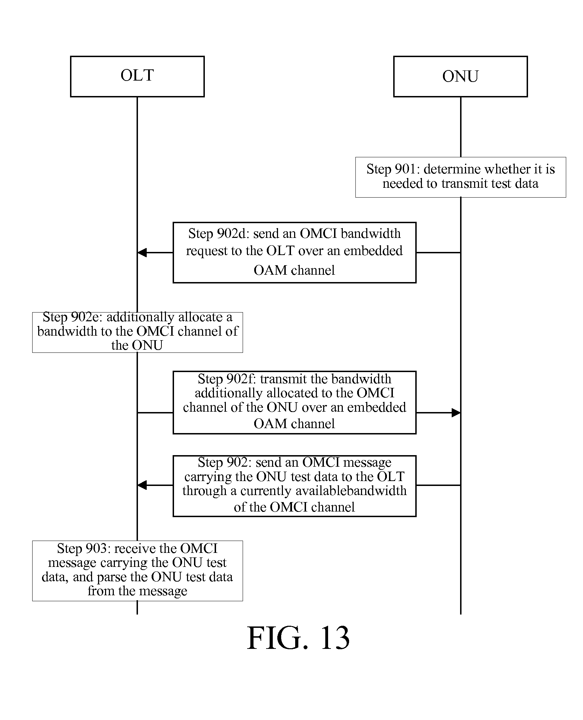

Referring to FIG. 13, the processes of transmitting and acquiring the test data respectively performed by the ONU and the OLT through the method of the third embodiment of the present invention include the following steps.

Step 901, the ONU determines whether there is a need to transmit test data according to the current situation of the optical network, and there is, Step 902 is performed. In Step 901 of FIG. 13, the ONU determining the current situation of the optical network satisfies a preset condition is described by way of example.

Step 902, the ONU sends an OMCI message carrying the ONU test data to the OLT through a currently available bandwidth of the OMCI channel.

Step 903, the OLT receives the OMCI message carrying the ONU test data, and parses the ONU test data from the message.

Further, in Step 902, the currently available bandwidth of the OMCI channel of the ONU is a bandwidth normally allocated by the OLT to the OMCI channel of the ONU added with a bandwidth additionally allocated by the OLT to the OMCI channel of the ONU. In addition, the additional bandwidth of the OMCI channel may be actively allocated by the OLT to the ONU, or allocated by the OLT to the ONU in response to a request from the ONU.

If, in Step 902, the currently available bandwidth of the OMCI channel of the ONU is a bandwidth normally allocated by the OLT to the OMCI channel of the ONU added with a bandwidth additionally allocated by the OLT to the OMCI channel of the ONU. As such, the method may further include Steps 902a to 902c before Step 902, and Steps 902a to 902c are not shown in FIG. 13.

Step 902a, the OLT determines whether the current situation of the optical network satisfies a preset condition, and if so, Step 902b is performed.

Step 902b, the OLT allocates an additional bandwidth to the OMCI channel of the ONU.

Step 902c, the OLT transmits the bandwidth additionally allocated to the OMCI channel of the ONU over an embedded OAM channel.

Steps 902a to 902c and Step 901 are not arranged strictly in time sequence.

If, in Step 902, the currently available bandwidth of the OMCI channel of the ONU is a bandwidth normally allocated by the OLT to the OMCI channel of the ONU added with a bandwidth additionally allocated by the OLT to the OMCI channel of the ONU in response to a request from the ONU, referring to FIG. 13, the method further includes the following steps between Step 901 and Step 902.

Step 902d, the ONU sends an OMCI bandwidth request to the OLT over an embedded OAM channel.

Step 902e, the OLT additionally allocates a bandwidth to the OMCI channel of the ONU.

Step 902f, the OLT transmits the bandwidth additionally allocated to the OMCI channel of the ONU over an embedded OAM channel.

Further, a PLOu domain of the OMCI bandwidth request in Step 902d has an Ind byte in a format listed in Table 6.

Therefore, according to the method of the third embodiment of the present invention, once determining there is a need to transmit test data according to the current situation of the optical network, the ONU sends an OMCI message carrying the ONU test data to the OLT through a bandwidth normally allocated and a bandwidth additionally allocated to the OMCI channel by the OLT. In this manner, when needing to transmit test data (for example, the performance is unstable), the ONU can report the test data to the OLT in time, which helps to perform the real-time monitoring, maintenance, and management on the network status of the PON. Accordingly, the OLT can obtain the ONU test data actively transmitted by the ONU in real time through the bandwidth normally allocated and the bandwidth additionally allocated by the OLT to the OMCI channel of the ONU, which helps to perform the real-time monitoring, maintenance, and management on the network status of the PON.

In an embodiment of the present invention, an ONU apparatus including a test data providing module, a transmission control module, and a transmitter module is further provided. The test data providing module is adapted to provide test data to the ONU. The transmission control module is adapted to determine whether there is a need to transmit the test data according to the current situation of the optical network, and if there is, send an indication to the transmitter module. The transmitter module is adapted to transmit the test data to the OLT apparatus according to the indication of the transmission control module.

The transmitter module includes a first encapsulation module adapted to encapsulate the test data into a PLOAM message, and a transmission interface module adapted to send the PLOAM message encapsulated with the test data to the OLT apparatus.

Optionally, the transmitter module includes a second encapsulation module adapted to encapsulate the test data to an OMCI channel, and a transmission interface module adapted to send the test data to the OLT apparatus through the OMCI channel.

The ONU apparatus further includes a bandwidth response module adapted to receive a bandwidth allocated by the OLT for transmitting the test data.

In addition, the ONU apparatus further includes a bandwidth request module adapted to request the ONU for a bandwidth to transmit the test data over an embedded OAM channel.

The test data providing module includes a first test data acquisition module adapted to acquire the test data of the ONU from a built-in test apparatus of the ONU apparatus, or a second test data acquisition module adapted to acquire the test data of the ONU from the test apparatus connected to the ONU apparatus.

Moreover, the ONU apparatus further includes a predetermined identifier generation module for generating a predetermined identifier that indicates the test data, and the transmitter module adapted to transmit the message carrying the test data and the predetermined identifier to the OLT apparatus according to the indication of the transmission control module.

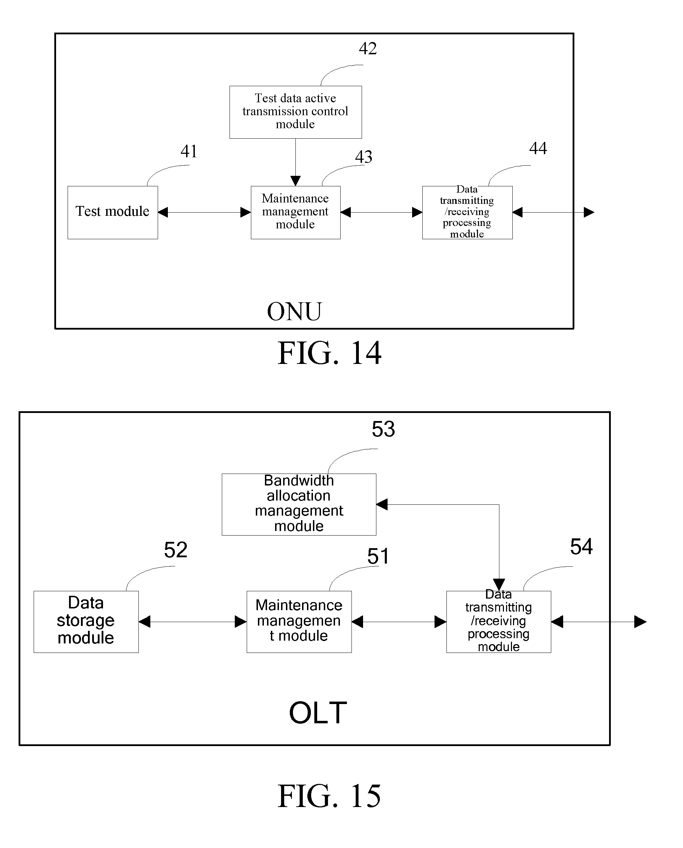

Referring to FIG. 14, in an embodiment of the present invention, an ONU includes a test module 41, a test data active transmission control module 42, a maintenance management module 43, and a data transmitting/receiving processing module 44.

The test module 41 is adapted to test the ONU and store the ONU test data. Upon requirements, the test module 41 may further process and store the test data. For example, on obtaining a large amount of test data, the ONU may perform an average processing on the data.

The test data active transmission control module 42 is adapted to determine whether the current situation of the optical network satisfies a preset condition, and if so, notify the maintenance management module 43 to transmit a test data.

The maintenance management module 43 is adapted to transmit the ONU test data stored in the test module 41 to the OLT through the data transmitting/receiving processing module 44 according to the notification of transmitting the test data issued by the test data active transmission control module 42.

The data transmitting/receiving processing module 44 is adapted to transmit/receive data.

In addition, the ONU test data stored in the test module 41 may include, but not limited to, one or more of the following parameters including ONU bias current, ONU transceiver temperature, ONU working voltage, ONU Transmitted optical power, ONU received optical power, and one or more parameters obtained by processing any of the above parameters.

The determination made by the test data active transmission control module 42 may include, but not limited to, one or more of the following steps. The steps include determining whether the ONU bias current is out of a preset range of the ONU bias current; determining whether the ONU transceiver temperature is out of a preset range of the ONU transceiver temperature; determining whether the ONU working voltage is out of a preset range of the ONU working voltage; determining whether the ONU transmitted optical power is out of a preset range of the ONU transmitted optical power; determining whether the ONU received optical power is out of a preset range of the ONU received optical power; determining whether the upstream or downstream BER is out of a preset range of the BER; and determining whether other preset events occur in the ONU.

In an embodiment of the present invention, an OLT apparatus including a data receiving module and a test data extraction module is also provided. The data receiving module is adapted to receive a data frame transmitted by the ONU apparatus. The test data extraction module is adapted to parse the data frame, and extract a test data from a predetermined position of the data frame.

Moreover, the OLT apparatus further includes a bandwidth allocation management module adapted to authorize a bandwidth for transmitting the test data for the ONU apparatus.

The bandwidth allocation management module is adapted to normally allocate a bandwidth to the ONU apparatus.

Further, the bandwidth allocation management module may additionally allocate a bandwidth to the ONU apparatus according to a bandwidth request from the ONU apparatus.

In addition, the bandwidth allocation management module may additionally allocate a bandwidth to the ONU apparatus actively according to an existing status monitoring result of the optical network.

The test data extraction module is adapted to parse the data frame, and extract the test data provided by the ONU apparatus from the predetermined position of the data frame according to a predetermined identifier that indicates the test data in the data frame.

Referring to FIG. 15, in an embodiment of the present invention, an OLT includes a maintenance management module 51, a data storage module 52, a bandwidth allocation management module 53, and a data transmitting/receiving processing module 54.

The maintenance management module 51 is adapted to acquire the ONU test data actively transmitted by the ONU from the data transmitting/receiving processing module 54, and store the obtained ONU test data into the data storage module 52.

The data storage module 52 is adapted to store data.

The bandwidth allocation management module 53 is adapted to allocate an upstream bandwidth to the ONU through the data transmitting/receiving processing module 54.

The data transmitting/receiving processing module 54 is adapted to transmit/receive data.

Moreover, the bandwidth allocation management module 53 may perform one or more of the following operations for allocating an upstream bandwidth to the ONU. The operations include allocating a bandwidth for transmitting a PLOAM message to the ONU through the data transmitting/receiving processing module 54; or, allocating a bandwidth to the OMCI channel of the ONU through the data transmitting/receiving processing module 54.

In an embodiment of the present invention, a PON system including at least one OLT apparatus connected to one or more ONU apparatuses through a ODN is further provided. The at least one ONU apparatus is adapted to determine whether there is a need to transmit test data according to the current situation of the optical network, and if there is, carry the test data at a predetermined position of a data frame and transmit the data frame to the OLT apparatus. The OLT apparatus is adapted to receive the data frame sent from the ONU apparatus, parse the data frame, and extract the test data provided by the ONU apparatus from the predetermined position of the data frame.

The data frame is further provided with a predetermined identifier that indicates the test data. The OLT apparatus is adapted to receive the data frame sent from the ONU apparatus, parse the data frame, and extract the test data provided by the ONU apparatus from the predetermined position of the data frame according to the predetermined identifier.

In addition, the predetermined position includes a position carring a PLOAM message in the data frame, or a position carring an OMCI channel in the data frame.

Moreover, the at least one ONU apparatus is adapted to determine whether there is a need to transmit the test data at the current situation according to a preset condition, and if there is, carry the test data at the predetermined position of the data frame and transmitting the data frame to the OLT apparatus.

Accordingly, in an embodiment of the present invention, a PON system includes at least one ONU as shown in FIG. 14, an OLT as shown in FIG. 15, and an ODN for accessing the ONUs into the OLT. In an embodiment of the present invention, the data transmitting/receiving processing module of the ONU communicates with the data transmitting/receiving processing module of the OLT through the ODN, so as to transmit/receive data.

Therefore, according to an embodiment of the present invention, once determining there is a need to transmit a test data as its current situation satisfies a preset condition, the ONU actively transmits the ONU test data to the OLT. As such, in this embodiment, the PON system can obtain the ONU test data in real time, which helps to perform the real-time monitoring on the status of the PON.

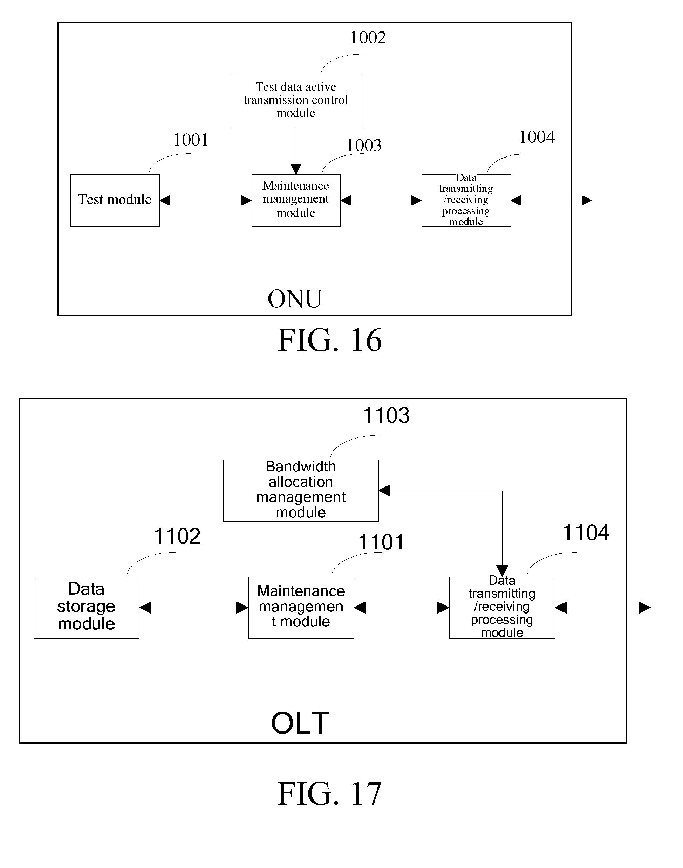

Referring to FIG. 16, in a fourth embodiment of the present invention, an ONU includes a test module 1001, a test data active transmission control module 1002, a maintenance management module 1003, and a data transmitting/receiving processing module 1004.

The test module 1001 is adapted to test the ONU and store the ONU test data. Upon requirements, the test module 1001 may further process and store the test data. For example, on obtaining a large amount of test data, the ONU may perform an average processing on the data.

The test data active transmission control module 1002 is adapted to determine whether the current situation of the optical network satisfies a preset condition, and if so, notify the maintenance management module 1003 to transmit test data.

The maintenance management module 1003 is adapted to perform the following operations through the data transmitting/receiving processing module 1004 according to the notification of transmitting the test data issued by the test data active transmission control module 1002. The operations include sending an PLOAM message request to the OLT over an embedded OAM channel, obtaining an emergency PLOAM message response returned by the OLT over the embedded OAM channel and a bandwidth allocated by the OLT to the ONU, and transmitting the PLOAM message carrying the ONU test data stored in the test module 1101 to the OLT through the bandwidth allocated by the OLT to the ONU.

The data transmitting/receiving processing module 1004 is adapted to transmit/receive data.

In addition, the ONU test data stored in the test module 1001 1 may include one or more of the following parameters including ONU bias current, ONU transceiver temperature, ONU working voltage, ONU transmitted optical power, ONU received optical power, and one or more parameters obtained by processing any of the above parameters.

The determination made by the test data active transmission control module 1002 may include, but not limited to, one or more of the following steps. The steps include determining whether the ONU bias current is out of a preset range of the ONU bias current; determining whether the ONU transceiver temperature is out of a preset range of the ONU transceiver temperature; determining whether the ONU working voltage is out of a preset range of the ONU working voltage; determining whether the ONU transmitted optical power is out of a preset range of the ONU transmitted optical power; determining whether the ONU received optical power is out of a preset range of received optical power; determining whether the upstream or downstream BER is out of a preset range of the BER; and determining whether other preset events occur in the ONU.

The PLOAM message carrying the ONU test data transmitted by the maintenance management module 1003 through the data transmitting/receiving processing module 1004 may be in a format listed in Table 1 or 2.

Referring to FIG. 17, in an embodiment of the present invention, an OLT includes a maintenance management module 1101, a data storage module 1102, a bandwidth allocation management module 1103, and a data transmitting/receiving processing module 1104.

The maintenance management module 1101 is adapted to acquire from the data transmitting/receiving processing module 1104 a PLOAM message carrying the ONU test data transmitted by the ONU through a bandwidth allocated thereto by the OLT, parse the ONU test data from the message, and store the obtained ONU test data into the data storage module 1102.

The data storage module 1102 is adapted to store data.

The bandwidth allocation management module 1103 is adapted to allocate an upstream bandwidth to the ONU through the data transmitting/receiving processing module 1104. The above bandwidth allocation operation at least includes obtaining from the data transmitting/receiving processing module 1104 an emergency PLOAM message request sent by the ONU over an embedded OAM channel, allocating a bandwidth to the ONU, and feeding back an emergency PLOAM message response and the allocated bandwidth to the ONU through the data transmitting/receiving processing module 1104 over the embedded OAM channel.

The data transmitting/receiving processing module 1104 is adapted to transmit/receive data.

Accordingly, in an embodiment of the present invention, a PON system includes at least one ONU as shown in FIG. 16, an OLT as shown in FIG. 17, and an ODN for accessing the ONUs into the OLT. In this embodiment, the data transmitting/receiving processing module of the ONU communicates with the data transmitting/receiving processing module of the OLT through the ODN, so as to transmit/receive data.

Therefore, according to the fourth embodiment of the present invention, once determining that the current situation of the optical network satisfies a preset condition, the ONU sends an emergency PLOAM message request to the OLT for bandwidth allocation, and after obtaining an emergency PLOAM message response returned by the OLT and an allocated bandwidth, the ONU transmits the PLOAM message carrying the ONU test data to the OLT through the bandwidth allocated by the OLT. In this manner, in this embodiment, the PON system can obtain the ONU test data in real time, which helps to perform the real-time monitoring on the status of the PON.

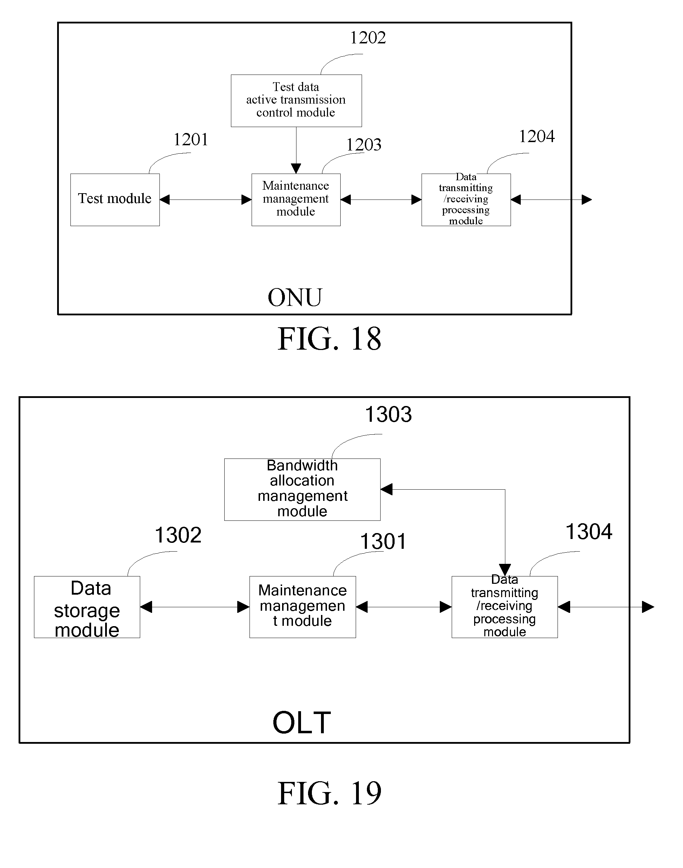

Referring to FIG. 18, in a fifth embodiment of the present invention, an ONU includes a test module 1201, a test data active transmission control module 1202, a maintenance management module 1203, and a data transmitting/receiving processing module 1204.

Different from the fourth embodiment in FIG. 16, the maintenance management module 1203 is adapted to perform the following operation through the data transmitting/receiving processing module 1204 according to the notification of transmitting the test data issued by the test data active transmission control module 1202. The operation includes sending an OMCI message carrying the ONU test data to the OLT through a bandwidth normally allocated by the OLT to the OMCI channel of the ONU.

The OMCI message for carrying the ONU test data transmitted by the maintenance management module 1203 through the data transmitting/receiving processing module 1204 has a transaction correlation identifier with a value agreed by the OLT and the ONU, for example, 0x0000. The message may be in a format listed in Table 4.

Referring to FIG. 19, in the fifth embodiment of the present invention, an OLT includes a maintenance management module 1301, a data storage module 1302, a bandwidth allocation management module 1303, and a data transmitting/receiving processing module 1304.

The maintenance management module 1301 is adapted to acquire from the data transmitting/receiving processing module 1304 an OMCI message carrying the ONU test data transmitted by the ONU through a bandwidth normally allocated by the OLT to the OMCI channel of the ONU, then parse the ONU test data from the message, and store the obtained ONU test data into the data storage module 1302.

The data storage module 1302 is adapted to store data.

The bandwidth allocation management module 1303 is adapted to allocate an upstream bandwidth to the ONU through the data transmitting/receiving processing module 1304. The above bandwidth allocation operation at least includes normally allocating a bandwidth to the OMCI channel of the ONU through the data transmitting/receiving processing module 1304.

The data transmitting/receiving processing module 1304 is adapted to transmit/receive data.

Accordingly, in the fifth embodiment of the present invention, a PON system includes at least one ONU as shown in FIG. 18, an OLT as shown in FIG. 19, and an ODN for accessing the ONUs into the OLT. In this embodiment, the data transmitting/receiving processing module of the ONU communicates with the data transmitting/receiving processing module of the OLT through the ODN, so as to transmit/receive data.

Therefore, according to the fifth embodiment of the present invention, once determining that the current situation of the optical network satisfies a preset condition, the ONU sends an OMCI message carrying the ONU test data to the OLT through a bandwidth normally allocated by the OLT. In this manner, in this embodiment, the PON system can obtain the ONU test data in real time, which helps to perform the real-time monitoring on the status of the PON.

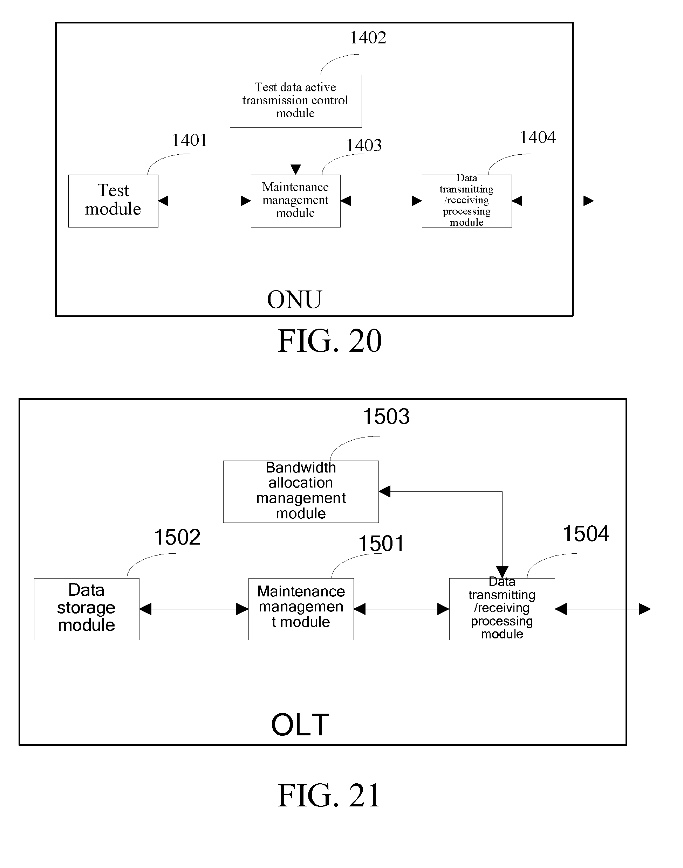

Referring to FIG. 20, in a sixth embodiment of the present invention, an ONU includes a test module 1401, a test data active transmission control module 1402, a maintenance management module 1403, and a data transmitting/receiving processing module 1404.

Different from the fourth embodiment in FIG. 16, the maintenance management module 1403 is adapted to perform the following operation through the data transmitting/receiving processing module 1404 according to the notification of transmitting the test data issued by the test data active transmission control module 1402. The operation includes sending an OMCI message carrying the ONU test data to the OLT through a bandwidth normally allocated and a bandwidth additionally allocated by the OLT to the OMCI channel of the ONU.

The OMCI message carrying the ONU test data transmitted by the maintenance management module 1403 through the data transmitting/receiving processing module 1404 may be in a format listed in Table 4.

In addition, the additional bandwidth of the OMCI channel may be actively allocated by the OLT to the ONU, or allocated by the OLT to the ONU in response to a request from the ONU.

If the additional bandwidth of the OMCI channel is allocated by the OLT to the ONU in response to a request from the ONU, the maintenance management module 1403 further transmits the OMCI bandwidth request to the OLT through the data transmitting/receiving processing module 1404 over the embedded OAM channel, so as to transmit the OMCI message carrying the ONU test data through the bandwidth normally allocated and the bandwidth additionally allocated by the OLT to the OMCI channel of the ONU.

Further, a PLOu domain of the OMCI bandwidth request sent by the maintenance management module 1403 through the data transmitting/receiving processing module 1404 over the embedded OAM channel has an Ind field in a format listed in Table 6.

Referring to FIG. 21, in the sixth embodiment of the present invention, an OLT includes a maintenance management module 1501, a data storage module 1502, a bandwidth allocation management module 1503, and a data transmitting/receiving processing module 1504.

The maintenance management module 1501 is adapted to acquire from the data transmitting/receiving processing module 1504 an OMCI message carrying the ONU test data transmitted by the ONU through a bandwidth normally allocated and a bandwidth additionally allocated by the OLT to the OMCI channel of the ONU, then parse the ONU test data from the message, and store the obtained ONU test data into the data storage module 1502.

The data storage module 1502 is adapted to store data.

The bandwidth allocation management module 1503 is adapted to allocate an upstream bandwidth to the ONU through the data transmitting/receiving processing module 1504. The above bandwidth allocation operation at least includes normally allocating a bandwidth to the OMCI channel of the ONU through the data transmitting/receiving processing module 1504, and additionally allocating a bandwidth to the OMCI channel of the ONU through the data transmitting/receiving processing module 1504.

The data transmitting/receiving processing module 1504 is adapted to transmit/receive data.

The additional bandwidth allocated by the bandwidth allocation management module 1503 to the OMCI channel of the ONU through the data transmitting/receiving processing module 1504 may be actively allocated by the allocation management module 1503 to the OMCI channel of the ONU, or allocated by the bandwidth allocation management module 1503 to the OMCI channel of the ONU in response to a request from the ONU.

If the additional bandwidth allocated by the bandwidth allocation management module 1503 to the OMCI channel of the ONU through the data transmitting/receiving processing module 1504 is actively allocated by the allocation management module 1503 to the OMCI channel of the ONU, the bandwidth allocation management module 1503 further performs the following operation before additionally allocating a bandwidth to the OMCI channel of the ONU. The operation includes determining whether the current situation of the optical network satisfies a preset condition, and if so, allocating an additional bandwidth to the OMCI channel of the ONU.

In addition, the determination made by the bandwidth allocation management module 1503 may include one or more of the following steps. The steps include determining whether the OLT received optical power is out of a preset range of it; determining whether the upstream or downstream BER is out of a preset range of it; and determining whether other preset events occur in the OLT.

If the additional bandwidth allocated by the bandwidth allocation management module 1503 to the OMCI channel of the ONU through the data transmitting/receiving processing module 1504 is allocated by the allocation management module 1503 to the OMCI channel of the ONU in response to a request from the ONU, the bandwidth allocation management module 1503 further performs the following operation before additionally allocating a bandwidth to the OMCI channel of the ONU. The operation includes receiving an OMCI bandwidth request sent by the ONU from the data transmitting/receiving processing module 1504 over an embedded OAM channel.

A PLOu domain of the OMCI bandwidth request has an Ind field in a format listed in Table 6.

Accordingly, in the above embodiment of the present invention, a PON system includes at least one ONU as shown in FIG. 20, an OLT as shown in FIG. 21, and an ODN for accessing the ONUs into the OLT. In this embodiment, the data transmitting/receiving processing module of the ONU communicates with the data transmitting/receiving processing module of the OLT through the ODN, so as to transmit/receive data.

Therefore, according to the sixth embodiment of the present invention, once determining that the current situation of the optical network satisfies a preset condition, the ONU sends an OMCI message carrying the ONU test data to the OLT through a bandwidth normally allocated and a bandwidth additionally allocated by the OLT to the OMCI channel of the ONU. In this manner, in this embodiment, the PON system can obtain the ONU test data in real time, which helps to perform the real-time monitoring on the status of the PON.

The above embodiments are used for illustrating instead of limiting the scope of the present invention. Any modifications, equivalent substitutions, and variations made within the scope of the present invention fall within the scope of the present invention.

## Claims

1. A method for transmitting test data in optical access network, comprising:
A. determining, by an optical network unit, ONU, whether there is a need to send test data according to a preset condition, and if there is, performing B;
B. sending, by the ONU, the test data and a predetermined identifier that indicates the test data to an optical line terminal, OLT.

2. The method according to claim 1, wherein:
the predetermined identifier that indicates the test data comprises a preset specific value of message type field in a physical layer operations administration maintenance, PLOAM, message; or
the predetermined identifier that indicates the test data comprises a preset specific value of transaction correlation identifier field in an ONU management and control interface, OMCI, message.

3. The method according to claim 1, wherein determining, by an optical network unit, ONU, whether there is a need to send test data according to the preset condition comprises one or more of the following steps:
determining whether the ONU bias current is out of a preset range of the ONU bias current; determining whether the ONU transceiver temperature is out of a preset range of the ONU transceiver temperature; determining whether the ONU working voltage is out of a preset range of the ONU working voltage; determining whether the ONU transmitted optical power is out of a preset range of transmitted optical power; determining whether the ONU received optical power is out of a preset range of the ONU received optical power; and determining whether the upstream or downstream bit error ratio, BER, is out of a preset range of the BER.

4. The method according to claim 1, wherein:
the test data is carried in a PLOAM message; or the test data is carried in an OMCI channel.

5. The method according to claim 1, further comprising:
transmitting, by the ONU, the test data and the predetermined identifier that indicates the test data through a bandwidth normally allocated by the OLT; or
transmitting, by the OUN, the test data and the predetermined identifier that indicates the test data through an extra bandwidth allocated by the OLT.

6. The method according to claim 1 or 5, further comprising:
sending, by the ONU, a bandwidth request to the OLT for transmitting the test data and the predetermined identifier that indicates the test data over an embedded operations administration maintenance, OAM, channel; or
allocating, by the OLT, the bandwidth for transmitting the test data and the predetermined identifier that indicates the test data for the ONU according to an existing monitoring result of the status of the optical network.

7. An optical network unit, ONU apparatus, comprising a test data providing module, a transmission control module, a predetermined identifier generation module and a transmitter module, wherein:
the test data providing module is adapted to provide test data of the ONU;
the predetermined identifier module is adapted to generate a predetermined identifier that indicates the test data;
the transmission control module is adapted to determine whether there is a need to send the test data according to a preset condition, and if there is, send an indication to the transmitter module; and
the transmitter module is adapted to send the test data and the predetermined identifier that indicates the test data according to the indication of the transmission control module.

8. The ONU apparatus according to claim 7, wherein the transmitter module comprises:
a first encapsulation module adapted to encapsulate the test data and the predetermined identifier according to a predetermined PLOAM message format; and a transmission interface module adapted to send the PLOAM message with the test data and the predetermined identifier; or
a second encapsulation module adapted to encapsulate the test data and the predetermined identifier according to a predetermined OMCI message format; and a transmission interface module adapted to send the OMCI message with the test data and the predetermined identifier.

9. The ONU apparatus according to claim 7, further comprising:
a bandwidth request module adapted to request the OLT for a bandwidth to transmit the test data over an embedded OAM channel.

10. The ONU apparatus according to claim 7, wherein the test data providing module comprises:
a first test data acquisition module adapted to acquire the test data of the ONU from a built-in test apparatus in the ONU apparatus; or
a second test data acquisition module adapted to acquire the test data of the ONU from the test apparatus connected to the ONU apparatus.

11. An optical line terminal, OLT, apparatus, comprising a data receiving module and a test data extraction module, wherein:
the data receiving module is adapted to receive a data frame; and
the test data extraction module is adapted to parse the data frame, and extract test data provided by an ONU apparatus from the data frame according to a predetermined identifier that indicates the test data in the data frame.

12. The OLT apparatus according to claim 11, further comprising:
a bandwidth allocation management module adapted to normally allocate a bandwidth to the ONU apparatus; or
adapted to additionally allocate a bandwidth to the ONU apparatus according to a bandwidth request from the ONU apparatus; or
adapted to additionally allocate a bandwidth to the ONU apparatus according to an existing status monitoring result of the optical network.

13. A passive optical network, PON, system, comprising:
an optical line terminal, OLT, apparatus, connected to one or more optical network unit, ONU, apparatuses through an optical distributed network, ODN;
the ONU apparatus adapted to determine whether there is a need to send test data and a predetermined identifier that indicates the test data according to the preset condition, and if there is, send the test data and the predetermined identifier according to a data frame with a predetermined format to the OLT apparatus; and
the OLT apparatus adapted to receive the data frame sent by the ONU apparatus, parse the data frame, and extract the test data provided by the ONU apparatus from the data frame according to the predetermined identifier that indicates the test data in the data frame.

14. The PON system according to claim 13, wherein the predetermined identifier that indicates the test data comprises:
a preset specific value of message type field in physical layer operations administration maintenance, PLOAM, message; or
a preset specific value of transaction correlation identifier field in ONU management and control interface, OMCI, message.

15. The PON system according to claim 13, wherein the predetermined format is PLOAM message format, or OMCI message format.
